# EUROPEAN PATENT SPECIFICATION

(11) **EP 0 540 179 B1**
(45) Date of publication and mention of the grant of the patent: **26.08.1998**
(21) Application number: 92308950.2
(22) Date of filing: 01.10.1992
(51) Int. Cl.: E04H 4/16, C02F 1/76

(54) **Electrolytic pool purifier**
Elektrolytischer Schwimmbadreiniger
Purificateur électrolytique d'eau de piscine

(30) Priority: 01.10.1991 US 770074
(43) Date of publication of application: 05.05.1993
(73) Proprietor: Silveri, Michael A., Incline Village, NV 89451 (US)
(72) Inventor: Silveri, Michael A., Incline Village, NV 89451 (US)
(74) Representative: Sommerville, John Henry

(56) References cited:
- FR-A- 1 140 060
- FR-A- 2 080 449
- US-A- 4 200 230
- US-A- 4 368 550

## Description

### Background of the Invention

### Field of the Invention

The present invention relates to a water purifier, and more particularly to a submerged electrolytic cell.

### Description of Related Art

Sodium hypochlorite is commonly used as a sanitizing agent in swimming pools, and the like, to control bacteria growth. Typical pool maintenance requires adding liquid sodium hypochlorite to pool water. Some pool owners, however, use electrolytic cell devices in their pools or in their filtration systems to produce sodium hypochlorite by electrolysis. Examples of electrolytic cells used to generate sanitizing agents are disclosed in US Patent Nos. 4,992,156 and 4,790,923. In US Patent 4,790,923 there is disclosed an apparatus for communicating with a water line of a pool, said apparatus comprising an electrolytic cell having a plurality of electrodes and an enclosure defining an internal cavity for mounting said cell therein.

In water having a hardness greater than 700 parts per million ("hard water"), scale deposits from the water build up on surfaces adjacent to a water flow. If an electrolytic cell -- and for that matter, pool equipment in general -- is used in hard water, scale build-up causes water flow problems. Scale typically builds up and clogs small openings and conduits in the equipment. Thus, some manufacturers recommend using their equipment in water having a total hardness less than 500 parts per million.

Another type of pool cleaning system utilizes cleaning heads disposed at the bottom of swimming pools and having nozzles than expel high velocity streams of water along the bottom surfaces of the pools to loosen settled debris from the bottom surfaces and mixing the debris with water immediately adjacent the pool surfaces, such as the cleaning head system disclosed in US Patent No. 4,200,230.

### Summary of the Invention

The apparatus of the present invention is generally as described above in relation to US Patent 4,790,923 and is characterised by a nozzle for receiving water from the water line and including an edge that defines an orifice, at least a portion of the edge angling outwardly in the radial direction to give the orifice an increasing area from an inner surface to an outer surface of the nozzle, the orifice being disposed within the internal cavity and positioned so that water flows through the orifice into the cell.

In a preferred embodiment, the orifice produces a sufficient flow rate of water flowing through the orifice to inhibit scale formation on the edge. The nozzle further comprises a connector adapted to couple the nozzle with a water circulation line. The nozzle connector may include a threaded outer surface and a plurality of orifices. The nozzle preferably defines a plurality of orifices that are equally spaced around the circumference of the nozzle. The minimum width of the orifices preferably ranges between about 1.58 mm (1/16th inch) and about 9.52 mm (1/8th inch) and may equal approximately 4.76 mm (3/16th inch). The edge of the nozzle angles outwardly from a radius of the tubular nozzle by an incline angle equal to about 30° to 60°, and may equal approximately 45°.

The nozzle may be constructed of a high molecular weight polyethylene. The electrodes may further be juxtaposed within the interior cavity with the orifice having a rectangular configuration of a length equal to at least a distance across the juxtaposed series of electrodes.

In the preferred embodiment, the enclosure defines an aperture while the plurality of electrodes define a bore which passes through the electrodes and aligns with the enclosure aperture. The aperture and bore receive a cap end of the nozzle. A cap removably engages with the nozzle cap end, thereby sealing the nozzle cap and securing the enclosure onto the nozzle.

The enclosure may include an outlet opening that allows water flowing from the nozzle to exit the enclosure interior cavity into the pool. The outlet opening may preferably be defined between chamfered edges extending outwardly from the center of the enclosure. The chamfer edges may further be sufficiently close together to produce an ample flow rate of water through the outlet opening to break off scale formations projecting from the chamfer edges.

### Brief Description of the Drawings

Figure 1 illustrates a water purifier in accordance with one embodiment of the present invention attached to a side wall of a swimming pool;
Figure 2 is an exploded perspective view of the purifier of Figure 1;
Figure 3 is a partial cross-sectional view taken along line 3-3 of Figure 2;
Figure 4 is a partial rear perspective view of the purifier of Figure 1, illustrated with wall spacers;
Figure 5 is a plan view of the purifier of Figure 1 mounted to a curved pool wall;
Figure 6 is a partial cross-sectional view of the purifier of Figure 1 attached to an existing pool fitting embedded in the pool wall;
Figure 7 is a perspective view of a unmodified pool fitting;
Figure 8 is a cross-sectional view taken along line 8-8 of Figure 7;
Figure 9 is a perspective view of the pool fitting of Figure 7, with a directional nozzle configured in accordance with the present invention inserted into the fitting;

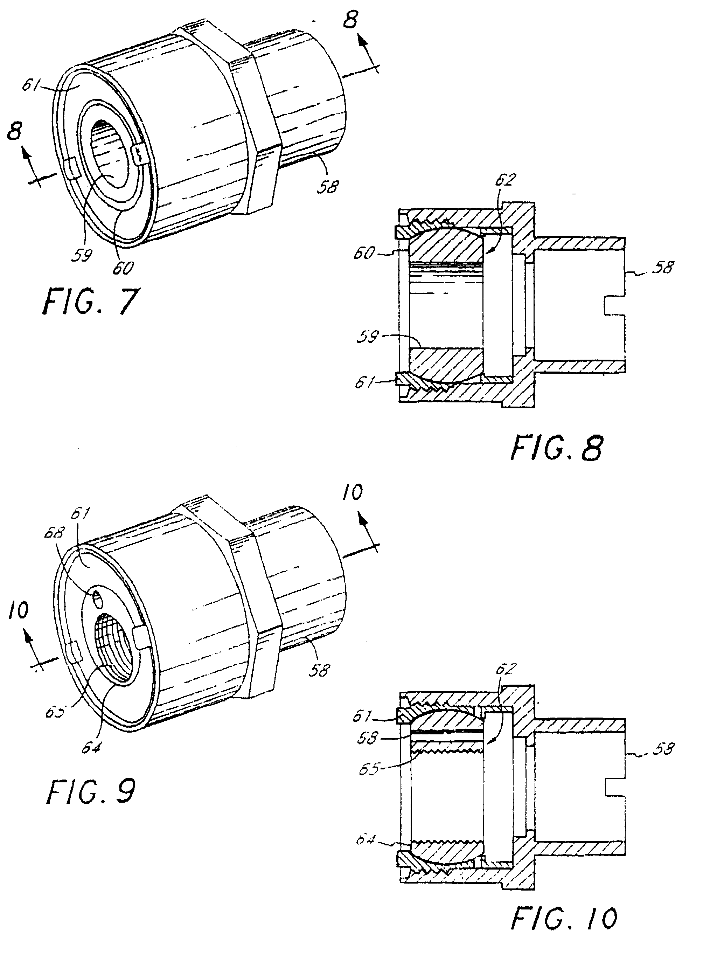

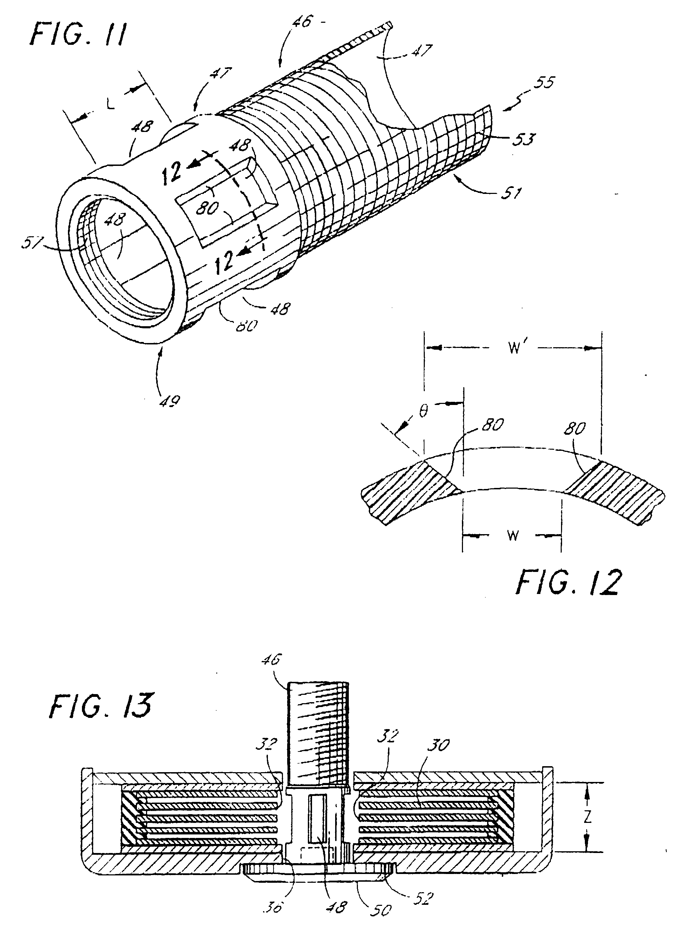

Figure 9 is a perspective view of the pool fitting of Figure 7, with a directional nozzle configured in accordance with the present invention inserted into the fitting;

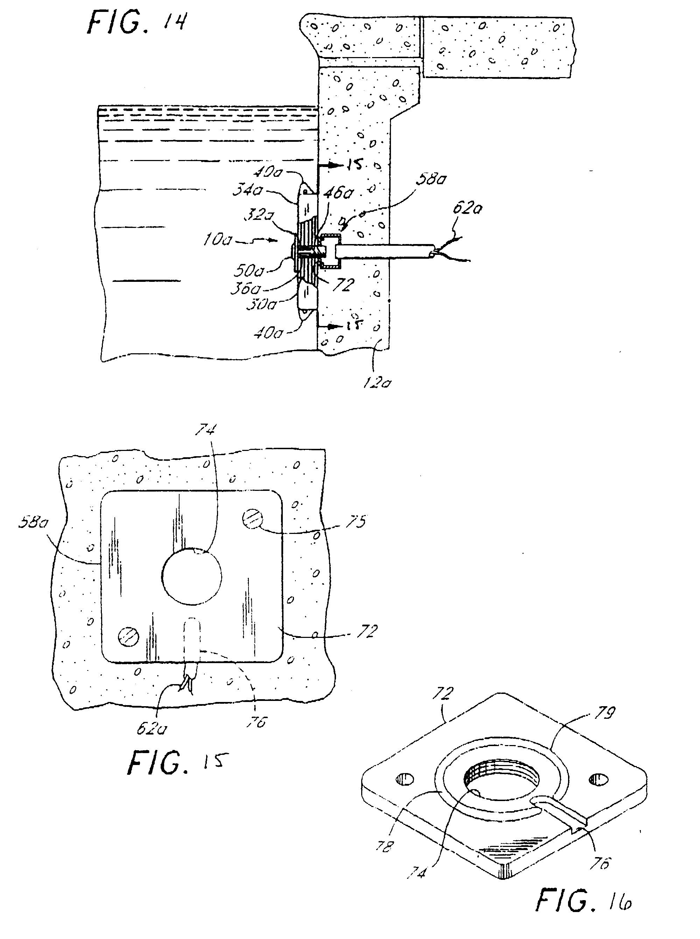

Figure 10 is a cross-sectional view taken along line 10-10 of Figure 9;

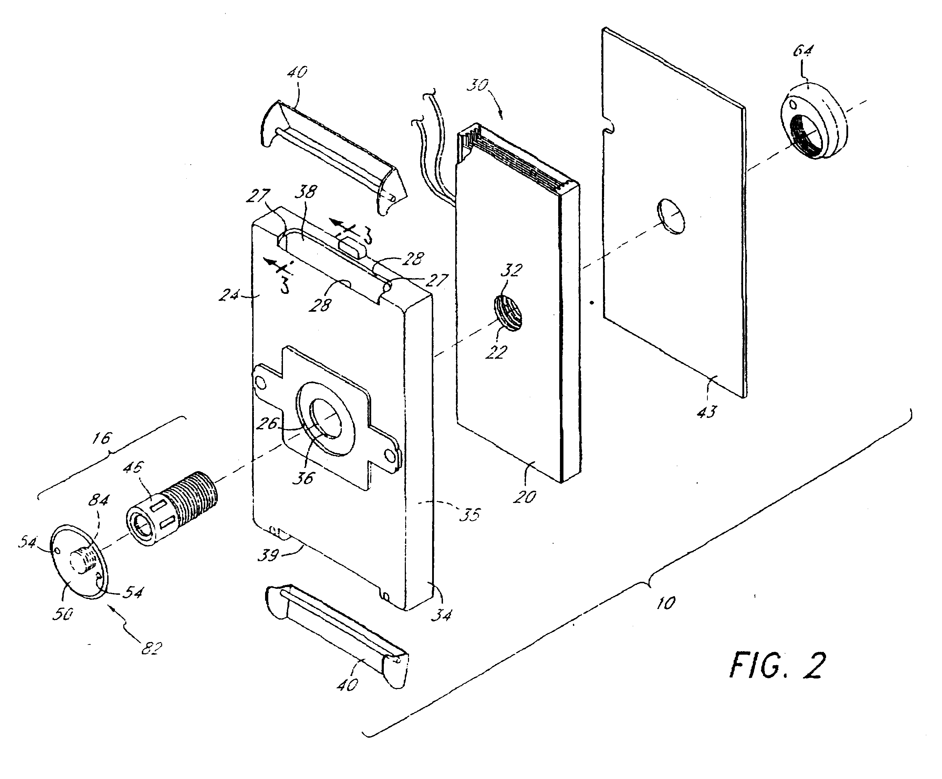

Figure 11 is a perspective view of a nipple of Figure 2;
Figure 12 is a partial cross-sectional view taken along line 12-12 of Figure 11;

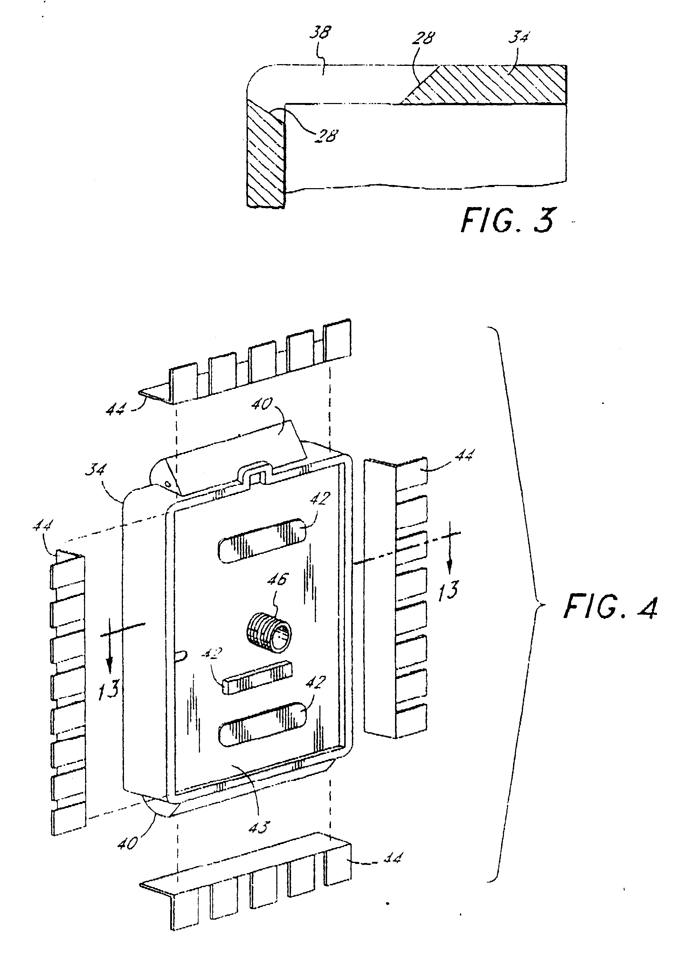

Figure 13 is a cross-sectional view taken along line 13-13 of Figure 4;
Figure 14 is a cross section of a pool illustrating a purifier in accordance with a second embodiment of the present invention attachment to a discharge wall fitting;
Figure 15 is a cross-sectional view taken along lines 15-15 of Figure 14, illustrating an attaching plate in accordance with the purifier of Figure 14 attached to the wall fitting; and
Figure 16 is a rear perspective view of the wall plate shown removed from the purifier for clarity.

### Detailed Description of the Preferred Embodiment

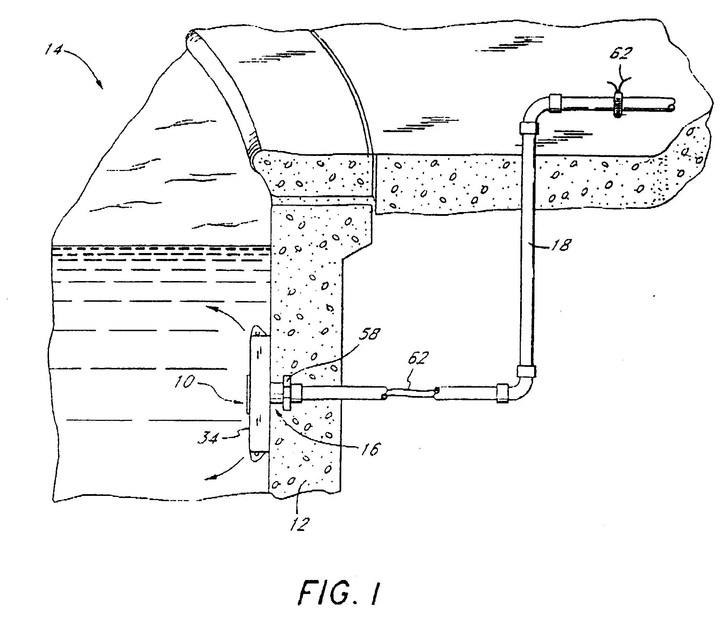

Figure 1 illustrates a sanitizing apparatus or purifier 10 of the present invention secured to a wall 12 of a swimming pool 14. Although the discussion of the purifier 10 proceeds in connection with a swimming pool, it is understood that the purifier 10 can also work with spas (i.e., Jacuzzies®), water fountains and the like.

Referring to Figures 1 and 2, the purifier 10 comprises an electrolytic cell 30 housed in an enclosure 34 and an attaching apparatus 16 for securing the electrolytic cell 30 to the pool wall 12. The attaching apparatus 16 is located at an exit port of a water circulation line 18. As a result, pressurized water exiting the water circulation line 18 flows through the enclosure 34, passing over the electrolytic cell 30. As discussed in detail below, the resulting water stream aids in reducing scale build-up on the electrolytic cell 30, the enclosure 34 and the attaching apparatus 16.

As illustrated in Figure 2, the electrolytic cell 30 is generally configured in accordance with the teachings of U.S. Patent No. 4,992, 156, issued on February 12, 1991, which is hereby incorporated by reference. The electrolytic cell 30 comprises a plurality of juxtaposed electrode plates 20. Each electrode plate 20 has a rectangular shape and defines an aperture 22 at its center. As juxtaposed, the electrode plates 20 define a cylindrical bore 32 having an axis perpendicular to the electrode plates 20.

The enclosure 34 fully encompasses the electrolytic cell 30 within an internal cavity 35. The enclosure 34 is molded of a thermoplastic, and defines an aperture 36 extending through the enclosure 34; the aperture 36 aligns with the bore of the electrolytic cell in assembly. As a result, a portion of the attaching apparatus 16 (namely a nipple 46) passes partially through the enclosure 34 and the electrolytic cell 30 in assembly. A front panel 24 of the enclosure includes a recess 26 having a larger diameter than the aperture 36 and circumscribing the aperture 36.

The enclosure 34 additionally comprises a top opening 38 and a bottom opening 39, providing exit ports for water flowing through the enclosure 34 from the water circulation line 18. The openings 38, 39 also provide a flow path for water circulating through the enclosure 34 as a result of the electrolytic process. With a circulation pump off, the electrolysis generates gaseous bubbles which travel through the enclosure 34 towards the surface of the pool water. The natural movement of the bubbles produces a current flow of water through the enclosure 34, entering through the bottom opening 39 and exiting through the top opening 38.

As illustrated in Figure 2, the top opening 38 has generally a rectangular configuration defined by four edge surfaces 27, 28. Two of the edge surfaces 28, as best seen in Figure 3, comprise chamfers, angling away from the defined opening 38. The opening 38 increase in area in an outward direction as a result of the chamfer configuration of the edge surfaces 28. As used herein, the "area" of an opening aperture, of orifice is measured across a plane of the opening, aperture or orifice perpendicular to the water flow. The bottom opening 39 has an identical configuration. This configuration increases water flow rate through the openings 38, 39; water flowing through the openings 38, 39 remains in a concentrated stream and does not diffuse at the outer edges of the openings 38, 39. As a result, the flow rate through the openings 38, 39 increases as water passes through the openings 38, 39.

The increased flow rate reduces scale formations which clog the openings 38,39. Scale, in hard water, deposits on the edges 27, 28 of the openings 38, 39 and builds outwardly in a stalagmite fashion, away from the edge surfaces 27, 28. The increased flow, however, limits the growth of the scale deposit. The increased water current fractures the stalagmite structure extending into the center of the current. Thus, scale is less likely to bridge the openings 38, 39 and to reduce the flow of water through the purifier 10.

About each opening 38, 39, the enclosure includes a directional diffuser 40. The directional diffusers direct water flow exiting the openings 38, 39 towards the center of the pool 14. As illustrated in Figure 2, each diffusers preferable includes a metal rod 41 extending longitudinally across the diffuser. The rods act as a grate or guard, preventing objects smaller than the openings 38, 39 from entering the openings.

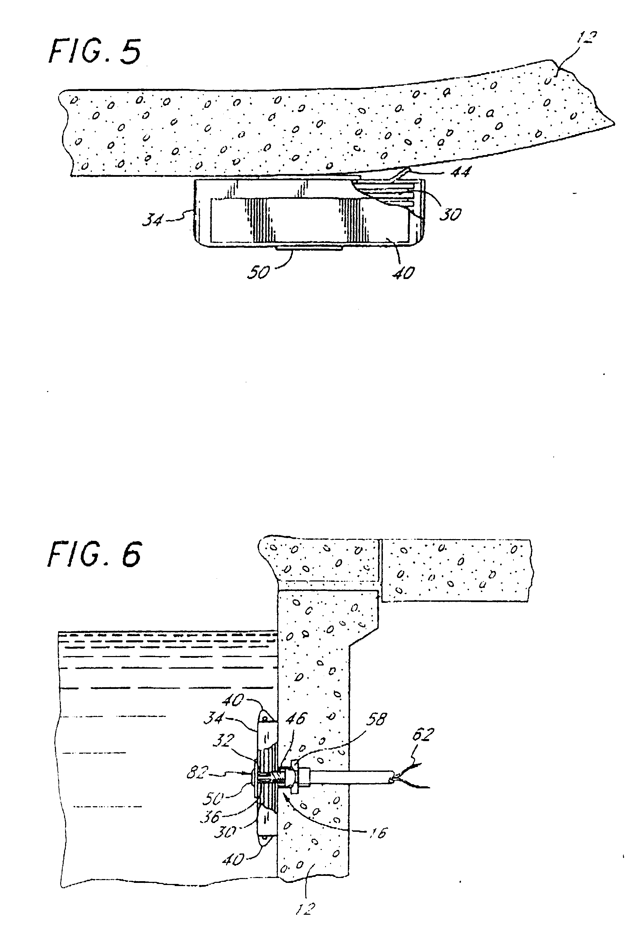

Referring to Figure 4, the enclosure 34 also includes two flange brackets 42 integrally mounted onto a back panel 43 of the enclosure 34. These brackets 42 receive several spacers 44 wedge between the enclosure 34 and the pool wall 12 to blend with the contoured (or otherwise not flat) surface of the pool wall 12, as illustrated in Figure 5. Although Figures 4 and 5 illustrate the purifier 10 as having four rectangular spacers 44, the proper combination and shape of the spacers 44 is dictated by the shape and contour of the pool wall 12.

Referring to Figure 6, the attaching apparatus 16 secures the enclosures 34 to the pool wall 12. The attaching apparatus advantageously utilizes an existing fitting 58 of the water circulation line 18 located on the pool wall 12. Pools commonly include at least one exit port fitting 58 positioned in the pool wall 12 below the water line and in communication with the water circulating system. Employing the existing fitting 58 reduces the cost and time associated with installation of the purifier 10.

As illustrated in Figures 7 and 8, the fitting 58 conventionally includes an eyeball-shaped directional discharger 60 having a central aperture 59. The directional discharger 60 has a spherical shape with two symmetric sides truncating the spherical shape along vertical planes. As best seen in Figure 8, a correspondingly shaped retainer ring 61 secures the directional discharger 60 within a socket 63 of the fitting 58 and thereby permits rotation of the discharger 60 in the fitting socket 63.

Referring to Figures 9 and 10, the attaching apparatus 16 comprises a similarly shaped directional discharger 64 having a thread hole 65 offset from the center of the directional discharger 64 and a wire passageway 68. The existing retainer ring 61 retains the modified directional discharger 64 within the existing socket 62, as illustrated in Figure 10.

As seen in Figures 2 and 6, the attaching apparatus 16 additionally comprises a nipple or nozzle 46. Figure 11 illustrates the nipple 46 having a generally tubular shape body 45 with an internal flow passage 47. The nipple body 45 defines a plurality of equally spaced apertures 48 proximate to a cap end 49. Although Figure 11 illustrates the nipple body 45 as defining four apertures, it is understood that any number of apertures 48 can be used as well. Proximate to the apertures 48, the nipple includes internal threads 57 extending into the flow passage 47 from the cap end 49. The nipple 46 also includes a connector 51 having a threaded exterior 53 extending from an engagement end 55 which engages the threaded hole 65 of the directional discharger 64 in assembly.

To prevent scale accumulation in the nipple apertures 48, the apertures 48 have a configuration increasing in area in the radial direction perpendicular to the water flow. As illustrated in Figure 12, chamfered edges 80 define the apertures 48; the edges 80 angle outwardly from a radius of the tubular nipple 46 by an incline angle θ. Preferably, the incline angle e ranges between 30° and 60°, and more preferably equals about 45°. As discussed above in connection with the enclosure openings 38, 39, this configuration increases flow rate through the apertures 48. The resulting water jet fractures scale formations extending from the chamfered edges 80.

Although Figure 11 illustrates the apertures 48 as having a rectangular configuration, it is understood that other aperture configurations, such as, for example, oval or circular shapes, can be used as well. The particular aperture configuration must be sized to produce a sufficient flow rate to break off scale formation accumulating on the edges 80 of the apertures 48. The aperture size, however, should not be too small, as scale and other objects will easy clog the apertures 48.

For example, the rectangular apertures 48 illustrated in Figures 11 and 12 have lengths L in the longitudinal direction, widths W at the interior surface of the nipple body, and widths W' at the exterior surface of the nipple body. These dimensions are measured perpendicular to the water flow through the apertures 48. Preferably, the widths W of the apertures 48 ranges between about 1.58 mm (1/16th inch) and 9.52 mm (3/8th inch), and more preferably equals about 4.76 mm (3/16th inch) for water flowing into the nipple 46 under 0.14 to 0.22 kg/cm² (2-3 pounds per square inch) of pressure.

As illustrated in Figures 11 and 13, the longitudinal length L of the aperture chamfer edges 80 is equal to about the stacked width Z of the juxtaposed electrodes 20. As a result, water exiting the apertures 48 flows over the electrode surfaces.

Referring to Figures 2 and 6, the attaching apparatus 16 further includes a cap 82 comprising a flange disk 50 and a threaded shank 84 (Figure 2). The threaded shank 84 is sized to engage the internal threads 57 of the nipple 46, without interfering with water flow through the nipple apertures 48. Although the Figures 2, 6 and 11 illustrate the cap 82 as including the externally threaded shank 84, it is contemplated that the cap could include internal threads, and the nipple cap end 49 could include external threads. Additionally, other type of connections, such as, for example, a male-female snap-type connector, can be used as well to removably connect together the cap 82 and cap end 49 of the nipple 46.

The flange disk 50 has a shape commensurate with that of the enclosure recess 26 and is larger in diameter than the enclosure aperture 36. In assembly, the flange disk 50 fits flush with the front panel 24 of the enclosure 34. The flange disk 50 defines two or more cavities 54 that mate with an installation tool. The tool is used to tighten the cap 82 onto the nipple 46, and is used in turn to tighten the nipple 46 into the directional discharger 64.

The attaching apparatus 16, especially the nipple 46, is preferably formed of a generally inert plastic, such as, for example, Teflon® or a high molecular weight polyethylene. Scale does not adhere well to these types of plastics.

In assembly, the directional discharger 64 fits within the socket 62 of the existing fitting 58 with the retainer ring 61 securing the discharger 64 in place. The nipple 46 threads into the threaded discharger hole 65 and cantilevers away from the pool wall 12. An electrical wire 62 (Figure 6), connected to the electrolytic cell 30, threads through the wire passageway 68. The enclosure 34 secures to the pool wall 12 by sliding over the nipple 46; the enclosure aperture 36 and electrode bore 32 receive the nipple 46. The cap 82 secures the enclosure 34 and electrolytic cell 30 in place by threading into the end cap 49 of the nipple 46. As assembled, the enclosure 34 abuts against the pool wall 12; however, if the pool wall is curved, edge spacers 44 are placed against the flange brackets 42 prior to tightening. The edge spacers 44 can be trimmed or contoured to the pool wall 12 configuration.

Assembled with the fitting socket 62, the nipple communicates with the water circulation line 18. Pressurized water flows inside the tubular nipple 46 and disperses through the apertures 46. As mentioned above, water exiting the apertures 46 flows over each electrode surface 20 and exits through the outlet openings 38, 39.

Figures 14 through 19 illustrate an other embodiment of the attaching apparatus 16 for use with another type of pool fitting 58. Where appropriate, like numbers with an "a" suffix are used to indicate like parts of the two embodiments for ease of understanding. Instead of a directional type fitting 58, as previously described, the fitting, as shown in Figure 14, comprises a wall fitting 58a surrounding an end of the water circulation line 18. If the wall fitting 58a contains a grill or diffuser, it is removed and not used. As depicted in Figures 14 and 15, a plate 72 attaches over the fitting 58a in place of a grill.

Referring to Figure 15, the plate 72 is constructed of thermoplastic and defines a threaded centrally located hole 74 and an offset wire receiving slot 76 near the hole. An O-ring 78, as seen in Figure 16, fits into a groove 79 and partially encircles the hole 74, terminating at the slot 76. As shown in Figure 15, the slot 76 permits the wires 62 to extend from the wall fitting 70 towards the purifier 10.

The installation of the purifier 10 is identical to the procedure described above, except that fasteners 75 (Figure 15), such as, for example, screws, securely fasten the plate 74 to the pool wall 12. The nipple 46 is threaded into the hole 74 and the enclosure abuts against the plate, compressing the O-ring 78 between the plate 74 and the pool wall 12.

The plate 74 can also be used where the circulation line 18 extends to the surface of the pool wall 12. That is, the pool does not include the wall fitting 58a. The plate mounts directly to the pool wall, aligning with and covering over the end of the water circulation line 18. The attaching apparatus 16 and enclosure attach to the plate 74, as described above.

The purifier 10, as defined, provides superior descaling characteristics. In hard water, scale deposits on the edges 80 of the nipple apertures 48 and on the edges 28 of the enclosure openings 38, 39. The diverging orifice configuration of the apertures 48 and the openings 38, 39 produces an increased flow rate through these orifices, as discussed in detail above. The increase flow rate prevents massive scale growth across the openings 38, 39 and the apertures 48. The purifier 10 additionally exhibits greater descaling qualities if used with a power supply reversing the polarity of electricity supplied to the electrodes 20, as described in U.S. Patent No. 4,992,156. These descaling features extends the life of the purifier 10.

The purifier 10 is also easily retrofitted to a pool 14 by using the existing circulation line fitting 58. The installation, as described above, is simple and cost efficient. Through a few simple installation steps, the nipple 46 couples with the circulation line 18 and extends outwardly from the pool wall 12. The enclosure 34 slips over the nipple 46 and the cap 82 secures the enclosure 34 onto the nipple 46. Installation does not require aligning the enclosure aperture 36 with the threaded hole 65 of the directional discharger 64. Nor does the installation of the purifier 10 require simultaneously coupling the enclosure 34 and the nipple 46 with the directional discharger 64. Thus, installation is usually completed from the pool deck reaching into the pool 14.

In assembly, the enclosure 34 fits flat against the pool wall 12 or smoothly blends with the contoured pool wall 12. This unobtrusive position prevents interference with pool sweeping equipment. The low profile of the purifier 10 as installed also reduces the possibility of interfering with swimmers and is generally inconspicuous--particularly with no wires 62 visible from the outside.

Although this invention is described in terms of certain preferred embodiments, other embodiments that are apparent to those of ordinary skill in the art are also within the scope of this invention. Accordingly, the scope of the invention is intended to be defined only by the claims which follow.

## Claims

1. An apparatus for communicating with a water line of a pool (14), said apparatus comprising an electrolytic cell (30) having a plurality of electrodes (20) and an enclosure (34) defining an internal cavity (35) for mounting said cell (30) therein, said apparatus being characterized by:
a nozzle (46) receiving water from said line and including an edge (80) that defines an orifice (48), at least a portion of said edge (80) angling outwardly in the radial direction to give said orifice (48) an increasing area from an inner surface of said nozzle (46) to an outer surface, said orifice (48) being disposed within said internal cavity (35) and positioned so that water flows through said orifice (48) into said cell (30).

2. The apparatus as in any of Claim 1, further characterized in that the orifice (48) produces a sufficient flow rate of water flowing through said orifice (48) to inhibit scale formation on said edge (80).

3. The apparatus as in any of Claims 1 and 2, further characterized in that said nozzle (46) comprises a connector (51) adapted to couple said nozzle (46) with a water circulation line (18).

4. The apparatus as in any of Claim 3, further characterized in that said nozzle connector (51) comprises a threaded outer surface (53).

5. The apparatus as in any of Claims 2-4, further characterized in that said nozzle (46) comprises a plurality of orifices (48).

6. The apparatus as in any of Claim 5, further characterized in that said nozzle (46) defines four orifices (48) equally spaced around the circumference of said nozzle (46).

7. The apparatus as in any of Claims 1-6, further characterized in that said orifice (48) has a minimum width (W) that ranges between about 1.58 mm (1/16th inch) and about 9.52 mm (3/8th inch).

8. The apparatus as in any of Claim 7, further characterized in that said minimum width (W) equals approximately 4.76 mm (3/16th inch)

9. The apparatus as in any of Claims 1-8, further characterized in that said edge (80) of said nozzle (46) angles outwardly from a radius of said tubular nozzle (46) by an incline angle θ equal to about 30° to 60°.

10. The apparatus as in any of Claim 9, further characterized in that said incline angle θ equals approximately 45°.

11. The apparatus as in any of Claims 1-10, further characterized in that said nozzle (46) is constructed of a high molecular weight polyethylene.

12. The apparatus as in any of Claims 1-11, further characterized in that said electrodes (20) are juxtaposed within said interior cavity (35) and said orifice (48) has a rectangular configuration of a length (L) equal to at least a distance across the juxtaposed series of electrodes (20).

13. The apparatus as in any of Claims 1-12, further characterized in that said enclosure (34) defines an aperture (36) and said plurality of electrodes (20) defined a bore (32) passing through the electrodes (20) and aligning with said enclosure aperture (36), said aperture (36) and said bore (32) receiving a cap end (49) of said nozzle (46), and said apparatus further characterized by a cap (82) removably engaging with said nozzle cap end (49), thereby sealing said nozzle cap end (49) and securing said enclosure (34) onto said nozzle.

14. The apparatus as in any of Claims 1-13, further characterized in that said enclosure (34) includes an outlet opening (38) allowing water flowing from said nozzle (46) to exit said enclosure interior cavity (35) into the pool (14).

15. The apparatus as in any of Claim 14, further characterized in that said outlet opening (38) is defined between chamfered edges (28) extending outwardly from the center of the enclosure (34).

16. The apparatus as in any of Claim 15, further characterized in that said chamfer edges (28) are sufficiently close together to produce an ample flow rate of water through said outlet opening (38) to break off scale formations projecting from said chamfer edges (28).

## Patentansprüche

1. Einrichtung zum Zusammenwirken mit einer Wasserleitung eines Pools (14), wobei die Einrichtung eine elektrolytische Zelle (30) mit einer Mehrzahl von Elektroden (20) und ein Gehäuse (34) aufweist, das einen inneren Hohlraum (35) zur Montage der Zelle (30) darin bestimmt, wobei die Einrichtung dadurch gekennzeichnet ist, daß
eine Düse (46) Wasser von der Wasserleitung aufnimmt und einen Rand (80) besitzt, der eine Öffnung (48) bestimmt, daß wenigstens ein Bereich des Randes (80) in der radialen Richtung winkelig nach außen verläuft, um der Öffnung (48) von einer Innenfläche der Düse (46) zu einer Außenfläche derselben eine sich vergrößernde Fläche zu geben, und daß die Öffnung (48) in dem inneren Hohlraum (35) angeordnet und so positioniert ist, daß Wasser durch die Öffnung (48) in die Zelle (34) fließt.

2. Einrichtung nach Anspruch 1, ferner dadurch gekennzeichnet, daß die Öffnung (48) eine ausreichende Strömungsrate von durch die Öffnung (48) fließendem Wasser erzeugt, um eine Kalkausbildung an dem Rand (80) zu verhindern.

3. Einrichtung nach Anspruch 1 oder 2, ferner dadurch gekennzeichnet, daß die Düse (46) ein Verbindungsteil (51) aufweist, das die Düse (46) mit einer Wasser-Zirkulationsleitung (18) verbinden kann.

4. Einrichtung nach Anspruch 3, ferner dadurch gekennzeichnet, daß das Düsen-Verbindungsteil (51) eine mit einem Gewinde versehene Außenfläche (53) besitzt.

5. Einrichtung nach einem der Ansprüche 2 bis 4, ferner dadurch gekennzeichnet, daß die Düse (46) eine Mehrzahl von Öffnungen (48) besitzt.

6. Einrichtung nach Anspruch 5, ferner dadurch gekennzeichnet, daß die Düse (46) vier Öffnungen (48) bestimmt, die gleichmäßig um den Umfang der Düse (46) beabstandet sind.

7. Einrichtung nach einem der Ansprüche 1 bis 6, ferner dadurch gekennzeichnet, daß die Öffnung (48) eine minimale Breite (W) besitzt, die in einem Bereich von 1,58 mm (1/16 inch) und etwa 9,52 mm (3/8 inch) liegt.

8. Einrichtung nach Anspruch 7, dadurch gekennzeichnet, daß die minimale Breite (W) etwa 4,76 mm (3/16 inch) beträgt.

9. Einrichtung nach einem der Ansprüche 1 bis 8, ferner dadurch gekennzeichnet, daß der Rand (80) der Düse (46) von einem Radius der röhrenförmigen Düse (46) unter einem Neigungswinkel θ winkelig nach außen verläuft, der etwa 30° bis 60° beträgt.

10. Einrichtung nach Anspruch 9, ferner dadurch gekennzeichnet, daß der Neigungswinkel θ etwa 45° beträgt.

11. Einrichtung nach einem der Ansprüche 1 bis 10, ferner dadurch gekennzeichnet, daß die Düse (46) aus Polyethylen mit einem hohen Molekulargewicht konstruiert ist.

12. Einrichtung nach einem der Ansprüche 1 bis 11, ferner dadurch gekennzeichnet, daß die Elektroden in dem inneren Hohlraum (35) nebeneinanderliegend angeordnet sind und daß die Öffnung (48) eine rechteckige Form mit einer Länge (L) aufweist, die wenigstens gleich einer Entfernung über die nebeneinander liegenden Elektrodenreihe (20) ist.

13. Einrichtung nach einem der Ansprüche 1 bis 12, ferner dadurch gekennzeichnet, daß das Gehäuse (34) eine Öffnung (36) bestimmt und daß die Mehrzahl der Elektroden (20) eine Bohrung (32) bestimmen, die durch die Elektroden (20) verläuft und zu der Gehäuseöffnung (36) ausgerichtet ist, daß die Öffnung (36) und die Bohrung (32) ein Kappenende (49) der Düse (46) aufnehmen und daß die Einrichtung ferner durch eine Kappe (82) gekennzeichnet ist, die entfernbar an dem Düsenkappenende (49) angreift und dadurch das Düsenkappenende (49) abdichtet und das Gehäuse (34) an der Düse befestigt.

14. Einrichtung nach einem der Ansprüche 1 bis 13, ferner dadurch gekennzeichnet, daß das Gehäuse (34) eine Auslaßöffnung (38) aufweist, die es ermöglicht, daß von der Düse (46) fließendes Wasser den inneren Hohlraum (35) des Gehäuses in den Pool (14) verläßt.

15. Einrichtung nach Anspruch 14, ferner dadurch gekennzeichnet, daß die Auslaßöffnung (38) zwischen schrägen Rändern (28) bestimmt wird, die sich von der Mitte des Gehäuses (34) aus nach außen erstrecken.

16. Einrichtung nach Anspruch 15, dadurch gekennzeichnet, daß die schrägen Ränder (28) ausreichend nahe zusammen sind, um eine große Strömungsrate von Wasser durch die Auslaßöffnung (38) zu erzeugen, um Kalkausbildungen abzubrechen, die von den schrägen Kanten (28) vorstehen.

## Revendications

1. Appareil pour communiquer avec une conduite d'eau d'un bassin (14), ledit appareil comprenant une cellule électrolytique (30) comportant une pluralité d'électrodes (20) et une enceinte (34) définissant une cavité interne (35) pour le montage à l'intérieur de ladite cellule (30), ledit appareil étant caractérisé par :
une buse (46) recevant l'eau de ladite ligne et comportant un pourtour (80) qui définit un orifice (48), au moins une partie dudit pourtour (80) faisant un angle extérieurement dans la direction radiale pour donner audit orifice (48) une surface croissante à partir d'une surface interne de ladite buse (46) vers une surface externe, ledit orifice (48) étant disposé à l'intérieur de ladite cavité interne (35) et positionné de sorte que l'eau circule à travers ledit orifice (48) dans ladite cellule (30).

2. Appareil tel que dans la revendication 1, caractérisé en outre en ce que l'orifice (48) produit une vitesse d'écoulement de l'eau circulant à travers ledit orifice (48) suffisante pour interdire la formation de dépôts sur ledit pourtour (80).

3. Appareil tel dans une des revendications 1 et 2, caractérisé en outre en ce que ladite buse (46) comprend un connecteur (51) agencé pour coupler ladite buse (46) avec une ligne de circulation d'eau (18).

4. Appareil tel que dans la revendication 3, caractérisé en outre en ce que ledit connecteur de buse (51) comprend une surface externe filetée (53).

5. Appareil tel que dans une des revendications 2-4, caractérisé en outre en ce que ladite buse (46) comprend une pluralité d'orifices (48).

6. Appareil tel que dans la revendication 5, caractérisé en outre en ce que ladite buse (46) définit quatre orifices (48) également espacés autour de la circonférence de ladite buse (46).

7. Appareil tel que dans une des revendications 1-6, caractérisé en outre en ce que ledit orifice (48) a une profondeur minimum (W) qui varie entre environ 1,58 mm (1/16 inch) et environ 9,52 mm (3/8 inch).

8. Appareil tel que dans la revendication 7, caractérisé en outre en ce que ladite profondeur minimum (W) est approximativement égale à 4,76 mm (3/16 inch).

9. Appareil tel que dans une des revendications 1-8, caractérisé en outre en ce que ledit pourtour (80) de ladite buse (46) fait un angle extérieurement par rapport à un rayon de ladite buse tubulaire (46) selon un angle incliné θ d'environ 30° à 60°.

10. Appareil tel que dans la revendication 9, caractérisé en outre en ce que ledit angle incliné θ est égal à approximativement 45°.

11. Appareil tel que dans une des revendications 1-10, caractérisé en outre en ce que ladite buse (46) est réalisée en un polyéthylène de masse moléculaire élevée.

12. Appareil tel que dans une des revendications 1-11, caractérisé en outre en ce que lesdites électrodes (20) sont juxtaposées à l'intérieur de ladite cavité (35) et ledit orifice (48) a une configuration rectangulaire de longueur (L) égale à au moins un écartement à travers la série juxtaposée d'électrodes (20).

13. Appareil tel que dans une des revendications 1-12, caractérisé en outre en ce que ladite enceinte (34) définit une ouverture (36) et ladite pluralité d'électrodes (20) définit un alésage (32) passant à travers les électrodes (20) et aligné avec ladite ouverture (36) de l'enceinte, ladite ouverture (36) et ledit alésage (32) recevant une extrémité support de capuchon (49) de ladite buse (46) et ledit appareil étant en outre caractérisé par un capuchon (82) pouvant s'engager de façon amovible avec ladite extrémité support de capuchon de buse (49), fermant ainsi ladite extrémité support de capuchon de buse (49) et fixant ladite enceinte (34) sur ladite buse.

14. Appareil tel que dans une des revendications 1-13, caractérisé en outre en ce que ladite enceinte (34) comprend une ouverture de sortie (38) permettant à l'eau coulant à travers ladite buse (46) de sortir de ladite cavité intérieure de l'enceinte dans le bassin (14).

15. Appareil tel que dans la revendication 14, caractérisé en outre en ce que l'ouverture de sortie (38) est définie entre les bords chanfreinés (28) s'étendant vers l'extérieur à partir du centre de l'enceinte (34).

16. Appareil tel que dans la revendication 15, caractérisé en outre en ce que lesdits bords chanfreinés (28) sont suffisamment jointifs pour produire une vitesse d'écoulement de l'eau importante à travers ladite ouverture de sortie (38) pour casser les formations de dépôt sortant desdits bords chanfreinés (28).
